# FASCICULE DE BREVET EUROPEEN

(11) **EP 2 586 711 B1**
(45) Date de publication et mention de la délivrance du brevet: **04.03.2015**
(21) Numéro de dépôt: 12188770.7
(22) Date de dépôt: 17.10.2012
(51) Int. Cl.: B64G 1/24

(54) **Procede et systeme de commande d'un ensemble d'au moins deux satellites adaptes pour fournir un service**
Steuerungsverfahren und -system einer Anordnung, die mindestens aus zwei Satelliten besteht, die entsprechend angepasst sind, um einen Dienst auszuführen
Method and system for controlling a set of at least two satellites adapted for providing a service

(30) Priorité: 28.10.2011 FR 1103290
(43) Date de publication de la demande: 01.05.2013
(73) Titulaire: Thales, 92200 Neuilly Sur Seine (FR)
(72) Inventeur: Sainct, Hervé, 06110 Le Cannet (FR); Amalric, Joël, 06810 Auribeau-sur-Siagne (FR); Bassaler, Pierre, 06250 Mougins (FR); Roser, Xavier, 06400 Cannes (FR)
(74) Mandataire: Brunelli, Gérald

(56) Documents cités:
- US-A1- 2008 027 595
- US-A1- 2008 105 788
- US-B1- 7 720 604
- GUANGYAN XU ET AL: "Periodic and quasi-periodic satellite relative orbits at critical inclination", AEROSPACE CONFERENCE, 2009 IEEE, IEEE, PISCATAWAY, NJ, USA, 7 mars 2009 (2009-03-07), pages 1-11, XP031449921, ISBN: 978-1-4244-2621-8
- HSI-HAN YEH ET AL: "Nonlinear tracking control for satellite formations", DECISION AND CONTROL, 2000. PROCEEDINGS OF THE 39TH IEEE CONFERENCE ON DEC. 12-15, 2000, PISCATAWAY, NJ, USA,IEEE, PISCATAWAY, NJ, USA, vol. 1, 12 décembre 2000 (2000-12-12), pages 328-333, XP010536779, ISBN: 978-0-7803-6638-1

## Description

La présente invention porte sur un procédé de commande d'un ensemble d'au moins deux satellites adaptés pour fournir un service mis en oeuvre par au moins une partie de l'ensemble desdits satellites à un instant donné.

Le service fourni par l'ensemble de satellites peut, par exemple, être un service de communication ou d'observation.

Il est connu des systèmes de commande d'un ensemble de satellites, souvent appelé flottille de satellites lorsqu'ils sont lancés sur une même orbite ou sur des orbites partageant certains paramètres orbitaux. Un tel système de commande est connu du document US 7 720 604 B1.

Un satellite artificiel est un objet fabriqué par l'homme, envoyé dans l'espace à l'aide d'un lanceur et gravitant autour d'une planète ou d'un satellite naturel comme la Lune. La vitesse imprimée par la fusée au satellite lui permet de se maintenir pratiquement indéfiniment dans l'espace en décrivant une orbite autour du corps céleste. Celle-ci, définie en fonction de la mission du satellite, peut prendre différentes formes : héliosynchrone, géostationnaire, elliptique, circulaire, ... et se situer à des altitudes plus ou moins élevées classifiées en orbite basse, moyenne, haute ou elliptique ....

Un satellite artificiel est composé d'une charge utile, définie spécifiquement pour la mission qu'il doit remplir, et d'une plate-forme souvent standardisée assurant les fonctions de support comme la fourniture d'énergie, la propulsion, le contrôle thermique, le maintien de l'orientation et les communications. Le satellite est suivi par un centre de contrôle au sol, qui envoie des instructions et recueille les données collectées grâce à un réseau de stations terrestres. Pour remplir sa mission le satellite doit se maintenir sur une orbite de référence en orientant ses instruments de manière précise : des interventions sont nécessaires à intervalles réguliers pour corriger les perturbations naturelles de l'orbite générées, dans le cas d'un satellite terrestre, par les irrégularités du champ de gravité, l'influence du Soleil et de la Lune ainsi que la traînée créée par l'atmosphère qui subsiste en orbite basse.

La durée de fonctionnement d'un service fourni par un ensemble de satellites est liée à la masse de carburant embarquée et sa consommation.

Une grande partie de l'énergie fournie par ce carburant embarqué à bord d'un satellite sert à maintenir son orbite sur une trajectoire nominale et d'orienter ses instruments.

L'un des facteurs contraignant la durée d'une mission spatiale est l'utilisation de ressources embarquées non renouvelables comme le carburant. Ceci a un impact tel que certaines solutions orbitales sont pratiquement inaccessibles à cause du coût excessif qu'elles représenteraient en termes de carburant.

Un but de l'invention est notamment de limiter la consommation de carburant, pour chaque satellite de l'ensemble de satellites permettant de fournir un service, de manière à, pour une même quantité de carburant embarqué à bord d'un satellite, permettre auxdits satellite de fournir ce service plus longtemps.

Il est proposé, selon un aspect de l'invention, un procédé de commande d'un ensemble d'au moins deux satellites adaptés pour fournir un service mis en oeuvre par au moins une partie de l'ensemble desdits satellites à un instant donné, dans lequel, en continu ou pseudo-continu, on calcule une valeur moyenne des longitudes des noeuds ascendants respectifs de chaque satellite, et, pour chaque satellite, on commande une correction de trajectoire du satellite par régulation de la longitude du noeud ascendant sur une consigne égale à ladite valeur moyenne courante.

Aussi, on ne maintient pas les satellites sur leurs orbites respectives, mais on les laisse dériver en maintenant la longitude du noeud ascendant de chacun, sur une consigne égale à la valeur moyenne courante des longitudes des noeuds ascendants respectifs de chaque satellite.

Ainsi la consommation de carburant de chaque satellite est fortement diminuée par rapport à un maintien de l'ensemble des satellites sur leurs orbites initiales respectives, tout en conservant le rendu du service.

Le procédé proposé consiste à alléger la contrainte "carburant" dans le cas d'une flottille ou d'une constellation de satellites, en laissant dériver certains des paramètres orbitaux individuels de chaque satellite, car la présence simultanée de plusieurs satellites permet de relayer le service à apporter, même en cas d'évolution des paramètres orbitaux, à la seule condition de contrôler chaque satellite autour de la dérive séculaire moyenne d'ensemble de la flottille de satellites.

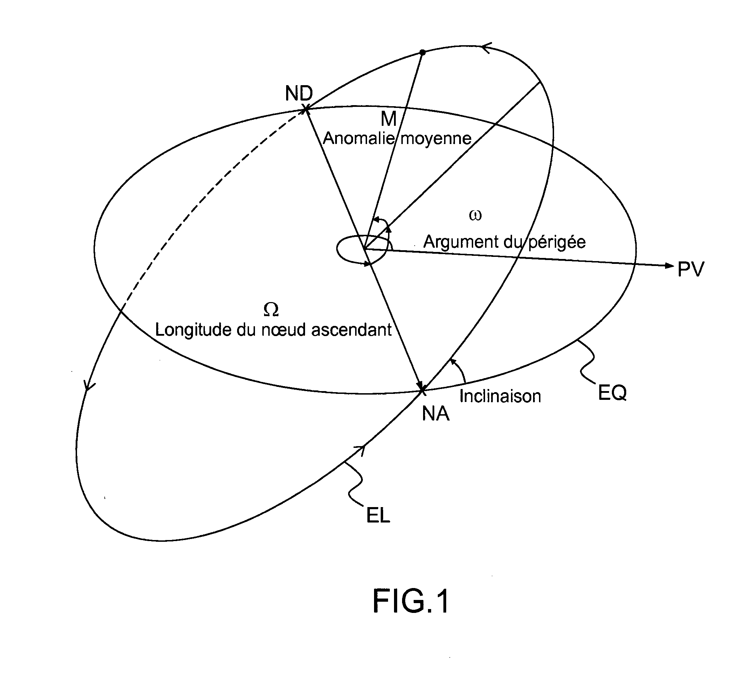

On définit la longitude des noeuds ascendants à la description de la figure 1.

Selon un mode de mise en oeuvre, on mesure la longitude du noeud ascendant desdits satellites, respectivement lorsqu'un satellite est en visibilité de sa station de commande au sol.

Ainsi, cette mesure nécessaire au calcul de la consigne est disponible à l'endroit même d'où vont partir les télécommandes fixant la consigne au satellite.

Dans un mode de mise en oeuvre, on relie les stations de commande au sol par un réseau de communication.

Ainsi, les satellites peuvent être contrôlés par des stations géographiquement distinctes, car le fait qu'elles soient reliées par un réseau de communication permet à chacune de disposer de toutes les mesures de longitude des noeuds ascendants nécessaires au calcul de sa valeur moyenne.

Selon un mode de mise en oeuvre, on utilise une unique station de commande au sol pour l'ensemble desdits satellites.

Ainsi, il n'est plus nécessaire de transférer des valeurs de longitude de noeud ascendant et cette unique station peut directement effectuer le calcul de la valeur moyenne

Dans un mode de mise en oeuvre, une commande de correction de trajectoire d'un satellite, lorsque ledit satellite participe à la fourniture dudit service, peut être différée à un moment où le satellite ne participe plus à la fourniture dudit service.

Ainsi, la disponibilité opérationnelle du satellite est augmentée, car les corrections de trajectoire qui entraînent généralement une indisponibilité du service (par exemple à cause d'un dépointage dû à l'orientation d'une tuyère pour corriger la vitesse...) ont lieu à un moment où le service est inutilisé sur ce satellite.

Selon un mode de mise en oeuvre, les calculs et commandes sont effectués de manière autonome par l'ensemble de satellites, ceux-ci pouvant éventuellement communiquer entre eux pour diffuser les valeurs de leurs longitudes de noeud ascendant nécessaires au calcul de ladite valeur moyenne.

Il est également proposé, selon un autre aspect de l'invention, un système de commande d'un ensemble d'au moins deux satellites adaptés pour fournir un service mis en oeuvre par au moins une partie de l'ensemble desdits satellites à un instant donné, comprenant des moyens de calcul, en continu ou pseudo-continu, d'une valeur moyenne des ascensions droite du noeud ascendant respectives de chaque satellite, et des moyens de commande, pour chaque satellite, d'une correction de trajectoire du satellite par régulation de l'ascension droite du noeud ascendant sur une consigne égale à ladite valeur moyenne courante.

Dans tout ce qui précède le terme "pseudo-continu" signifie que l'évolution du paramètre surveillé (ascension droite du noeud ascendant) est lente en comparaison de la période orbitale des satellites : en d'autres termes, pour calculer la moyenne de ces paramètres pour plusieurs satellites on n'a pas besoin d'une mesure absolument simultanée, effectuée à la même heure, mais seulement de mesures éparpillées par exemple durant une orbite sont parfaitement utilisables. Il est donc possible de se contenter pour obtenir la valeur moyenne d'effectuer la moyenne de mesures prises à des instants différents pour chaque satellite au cours de la même journée, simplement en effectuant ces mesures lorsque lesdits satellites passent en visibilité de leur(s) station(s) respective(s). C'est ce processus de calcul de la valeur moyenne à partir de mesures non exactement simultanées qui est qualifié de "pseudo-continu".

L'invention sera mieux comprise à l'étude de quelques modes de réalisation décrits à titre d'exemples nullement limitatifs et illustrés par les dessins annexés sur lesquels :
- la figure 1 illustre schématiquement les grandeurs physiques utilisées ;
- la figure 2 illustre schématiquement les étapes du procédé, selon un aspect de l'invention ;
- la figure 3 illustre un exemple de système de commande, selon un aspect de l'invention.

Sur les différentes figures, les éléments ayant des références identiques sont similaires.

Sur la figure 1, les variables classiques utilisées pour définir les orbites de satellites sont représentées.

Une orbite elliptique EL d'un satellite peut se définir dans l'espace selon six paramètres permettant de calculer très précisément la trajectoire complète. Deux de ces paramètre, i.e. l'excentricité et le demi-grand axe définissent la trajectoire dans un plan, trois autres paramètres i.e. l'inclinaison i, la longitude Ω_{NA} du noeud ascendant NA, et l'argument ω du périhélie définissent l'orientation du plan dans l'espace, et le dernier, i.e. l'instant de passage au périhélie définit la position du satellite.

Le demi-grand axe a est la moitié de la distance qui sépare le périgée de l'apogée. Ce paramètre définit la taille absolue de l'orbite elliptique ou circulaire.

L'excentricité e d'une ellipse mesure le décalage des foyers par rapport au centre de l'ellipse, c'est le rapport de la distance entre le centre et un foyer et le demi-grand-axe. La trajectoire étant elliptique, on a 0<e<1

L'inclinaison i est l'angle que fait le plan orbital avec un plan de référence, en l'occurrence le plan de l'équateur EQ.

La longitude Ω_{NA} du noeud ascendant NA est l'angle entre la direction du point vernal PV et la ligne des noeuds reliant le noeud ascendant NA et le noeud descendant ND, dans le plan de l'équateur. La direction du point vernal PV est la droite contenant le Soleil et le point vernal PV (point de repère astronomique correspondant à la position du Soleil au moment de l'équinoxe du printemps). La ligne des noeuds est la droite à laquelle appartiennent les noeuds ascendant (le point de l'orbite où l'objet passe du côté nord de l'équateur) et descendant (le point de l'orbite où l'objet passe du côté sud de l'équateur).

L'argument du périgée ω est l'angle formé par la ligne des noeuds et la direction du périgée (la droite à laquelle appartiennent l'étoile (ou l'objet central) et le périgée de la trajectoire de l'objet), dans le plan orbital. La longitude Op du périgée est la somme de la longitude Ω_{NA} du noeud ascendant NA et de l'argument du périgée.

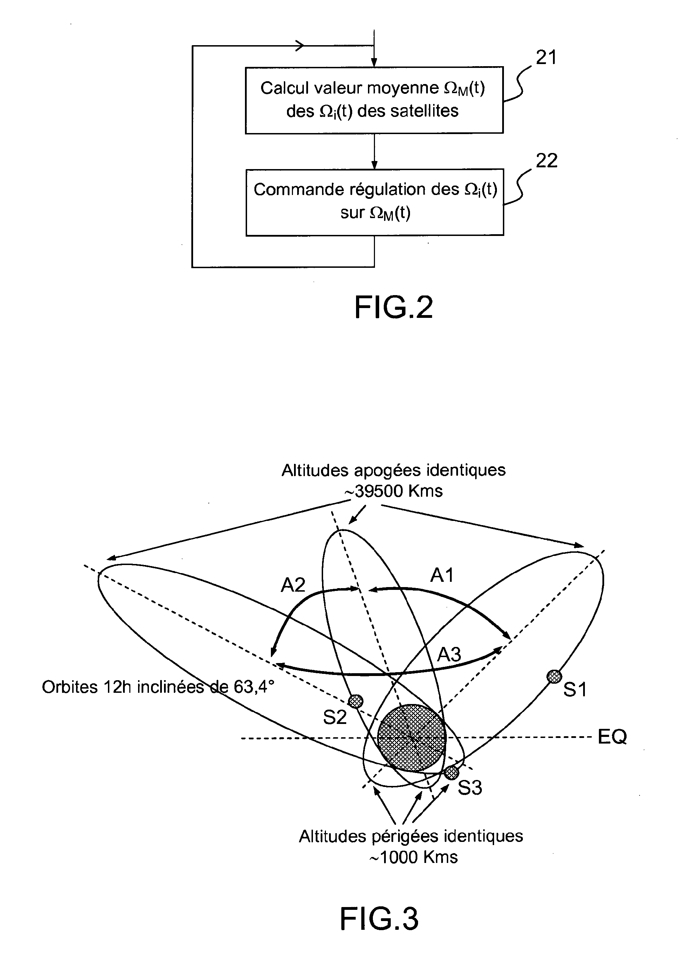

La figure 2 illustre schématiquement les étapes du procédé de commande d'un ensemble d'au moins deux satellites adaptés pour fournir un service mis en oeuvre par au moins une partie de l'ensemble desdits satellites à un instant donné, selon un aspect de l'invention.

De manière continue ou pseudo-continue, on calcule (étape 21) une valeur moyenne Ω_{M}(t) des longitudes des noeuds ascendants respectifs Ωᵢ(t) de chaque satellite d'indice i, et pour chaque satellite, on commande (étape 22) une correction de trajectoire du satellite par régulation de la longitude du noeud ascendant Ωᵢ(t) sur une consigne égale à ladite valeur moyenne courante Ω_{M}(t).

On mesure la longitude du noeud ascendant Ωᵢ(t) desdits satellites, respectivement lorsqu'un satellite est en visibilité de sa station de commande au sol.

On peut relier les stations de commande au sol par un réseau de communication. Il est possible d'utiliser une unique station de commande au sol pour l'ensemble desdits satellites

Une commande de correction de trajectoire d'un satellite, lorsque le satellite participe à la fourniture du service, peut être différée à un moment où le satellite ne participe plus à la fourniture dudit service. Ainsi, la fourniture du service n'est pas perturbée.

En variante, les calculs et commandes peuvent être effectués de manière autonome par l'ensemble de satellites, et ne pas nécessiter de station au sol.

Sur la figure 3 est représenté un exemple pour une constellation à trois satellites S1, S2 et S3 sur trois plans orbitaux séparés par des angles de 120°, pour durée de vie de la constellation de quinze ans, avec un contrôle relatif de l'ascension droite du noeud ascendant Ωᵢ(t), c'est-à-dire que le maintien à poste corrige seulement les écarts par rapport à la partie commune ou moyenne Ω_{M}(t) de l'évolution pour l'ensemble de la constellation, la partie commune ou moyenne de l'évolution n'étant pas corrigée.

Cette stratégie de maintien à poste permet de réduire substantiellement le coût moyen annuel du maintien à poste. Sur cet exemple, le coût passant de 150 à 180 m/s par an, à seulement 15 à 30 m/s par an.

L'économie de carburant (consommable) ainsi réalisée se traduit directement en augmentation de durée de vie potentielle pour le satellite, ce qui fait que l'on peut soit concevoir un satellite plus léger (avec moins de carburant) pour la même durée de vie, soit bénéficier d'une durée de vie plus élevée en appliquant l'invention à des satellites déjà existants voire déjà lancés.

Dans le cas d'une flottille de satellite existants, l'invention se traduit par la modification des procédures de maintien à poste des satellites, aboutissant par exemple à des chronogrammes de manoeuvres distincts, prévoyant des manoeuvres différentes à des moments différents, qui se traduisent en moyenne par des consommations diminuées de carburant.

## Revendications

1. Procédé de commande d'un ensemble d'au moins deux satellites adaptés pour fournir un service mis en oeuvre par au moins une partie de l'ensemble desdits satellites à un instant donné, **caractérisé en ce qu'**en continu ou pseudo-continu, on calcule une valeur moyenne (Ω_{M}(t)) des longitudes (Ωᵢ(t)) des noeuds ascendants respectifs de chaque satellite, et pour chaque satellite, on commande une correction de trajectoire du satellite par régulation de la longitude du noeud ascendant (Ωᵢ(t)) sur une consigne égale à ladite valeur moyenne courante (Ω_{M}(t)).

2. Procédé selon la revendication 1, dans lequel on mesure la longitude du noeud ascendant (Ωᵢ(t)) desdits satellites, respectivement lorsqu'un satellite est en visibilité de sa station de commande au sol.

3. Procédé selon la revendication 2, dans lequel on relie les stations de commande au sol par un réseau de communication.

4. Procédé selon l'une des revendications précédentes, dans lequel on utilise une unique station de commande au sol pour l'ensemble desdits satellites.

5. Procédé selon l'une des revendications précédentes, dans lequel une commande de correction de trajectoire d'un satellite, lorsque ledit satellite participe à la fourniture dudit service, peut être différée à un moment où le satellite ne participe plus à la fourniture dudit service.

6. Procédé selon la revendication 1, dans lequel les calculs et commandes sont effectués de manière autonome par l'ensemble de satellites, ceux-ci pouvant éventuellement communiquer entre eux pour diffuser les valeurs de leurs longitudes de noeud ascendant nécessaires au calcul de ladite valeur moyenne.

7. Système de commande d'un ensemble d'au moins deux satellites (S1, S2, S3) adaptés pour fournir un service mis en oeuvre par au moins une partie de l'ensemble desdits satellites à un instant donné, **caractérisé par** des moyens de calcul, en continu ou pseudo-continu, d'une valeur moyenne (Ω_{M}(t)) des longitudes (Ωᵢ(t)) des noeuds ascendants respectifs de chaque satellite, et des moyens de commande, pour chaque satellite, d'une correction de trajectoire du satellite par régulation de la longitude du noeud ascendant (Ωᵢ(t)) sur une consigne égale à ladite valeur moyenne courante (Ω_{M}(t)).

## Patentansprüche

1. Steuerungsverfahren einer Anordnung aus mindestens zwei Satelliten, die angepasst sind, um eine Leistung zu liefern, die von mindestens einem Teil der Satellitenanordnung zu einem bestimmten Zeitpunkt bereitgestellt wird, **dadurch gekennzeichnet, dass** kontinuierlich oder pseudo-kontinuierlich ein Mittelwert (Ω_{M}(t)) der Längen (Ωᵢ(t)) der jeweiligen aufsteigenden Knoten jedes Satelliten berechnet und für jeden Satelliten eine Bahnkorrektur des Satelliten durch Einstellen der Länge des aufsteigenden Knotens (Ωᵢ(t)) auf einen Sollwert gleich dem laufenden Mittelwert (Ω_{M}(t)) befohlen wird.

2. Verfahren nach Anspruch 1, wobei die Länge des aufsteigenden Knotens (Ωᵢ(t)) der Satelliten beziehungsweise wenn ein Satellit von seiner Steuerstation am Boden gesehen wird, gemessen wird.

3. Verfahren nach Anspruch 2, wobei die Steuerstationen am Boden durch ein Kommunikationsnetz verbunden werden.

4. Verfahren nach einem der vorangehenden Ansprüche, wobei eine einzige Steuerstation am Boden für die Satellitenanordnung verwendet wird.

5. Verfahren nach einem der vorangehenden Ansprüche, wobei ein Korrekturbefehl der Bahn eines Satelliten, wenn der Satellit an der Bereitstellung der Leistung teilnimmt, zu einem Zeitpunkt verzögert werden kann, in dem der Satellit nicht mehr an der Bereitstellung der Leistung teilnimmt.

6. Verfahren nach Anspruch 1, wobei die Berechnungen und Befehle von der Satellitenanordnung autonom durchgeführt werden, wobei diese eventuell untereinander kommunizieren können, um die Werte ihrer Längen aufsteigender Knoten zu senden, die zur Berechnung des Mittelwerts notwendig sind.

7. Steuerungssystem einer Anordnung aus mindestens zwei Satelliten (S1, S2, S3), die angepasst sind, um eine Leistung zu liefern, die von mindestens einem Teil der Satellitenanordnung zu einem bestimmten Zeitpunkt bereitgestellt wird, **gekennzeichnet durch** Mittel zur kontinuierlichen oder pseudo-kontinuierlichen Berechnung eines Mittelwerts (Ω_{M}(t)) der Längen (Ωᵢ(t)) der jeweiligen aufsteigenden Knoten jedes Satelliten und Mittel zur Steuerung für jeden Satelliten einer Bahnkorrektur des Satelliten durch Einstellen der Länge des aufsteigenden Knotens (Ωᵢ(t)) auf einen Sollwert gleich dem laufenden Mittelwert (Ω_{M}(t)).

## Claims

1. A method for controlling a set of at least two satellites designed to provide a service implemented by at least part of said set of said satellites at a given instant, **characterised in that** a mean value (Ω_{M}(t)) is continuously or pseudo-continuously computed of the longitudes (Ωᵢ(t)) of the respective ascending nodes of each satellite and, for each satellite, a correction of the trajectory of said satellite is controlled by setting the longitude of the ascending node (Ωᵢ(t)) on a set point equal to said current mean value (Ω_{M}(t)).

2. The method according to claim 1, wherein the longitude of the ascending node (Ωᵢ(t)) of said satellites is measured, respectively, when a satellite can be seen by its ground control station.

3. The method according to claim 2, wherein the ground control stations are connected via a communication network.

4. The method according to any one of the preceding claims, wherein a single ground control station is used for said set of said satellites.

5. The method according to any one of the preceding claims, wherein a command for correcting the trajectory of a satellite, when said satellite participates in the provision of said service, can be deferred to a moment when said satellite no longer participates in the provision of said service.

6. The method according to claim 1, wherein the computations and commands are carried out autonomously by said set of satellites, with said satellites possibly being able to communicate with each other so as to broadcast the values of their ascending node longitudes that are required to compute said mean value.

7. A system for controlling a set of at least two satellites (S1, S2, S3) designed to provide a service implemented by part of said set of said satellites at a given instant, **characterised by** means for continuously or pseudo-continuously computing a mean value (Ω_{M}(t)) of the longitudes (Ωᵢ(t)) of the respective ascending nodes of each satellite and means for controlling, for each satellite, a correction of the trajectory of said satellite by setting the longitude of said ascending node (Ωᵢ(t)) on a set point equal to said current mean value (Ω_{M}(t)).
